(19) Europäisches Patentamt / European Patent Office / Office européen des brevets

(11) **EP 4 514 031 A1**

(12) **EUROPEAN PATENT APPLICATION**
published in accordance with Art. 153(4) EPC

(43) Date of publication:
**26.02.2025 Bulletin 2025/09**

(21) Application number: **22938432.6**

(22) Date of filing: **18.04.2022**

(51) International Patent Classification (IPC):
**H04W 72/20** (2023.01)    **H04W 4/70** (2018.01)
**H04W 48/10** (2009.01)

(52) Cooperative Patent Classification (CPC):
**H04W 4/70; H04W 48/10; H04W 72/20**

(86) International application number:
**PCT/JP2022/018096**

(87) International publication number:
**WO 2023/203629 (26.10.2023 Gazette 2023/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
  • **OKANO, Mayuko**
    **Tokyo 100-6150 (JP)**
  • **HARADA, Hiroki**
    **Tokyo 100-6150 (JP)**

  • **KUMAGAI, Shinya**
    **Tokyo 100-6150 (JP)**
  • **KURITA, Daisuke**
    **Tokyo 100-6150 (JP)**
  • **TAKAHASHI, Yuki**
    **Tokyo 100-6150 (JP)**
  • **OHARA, Tomoya**
    **Tokyo 100-6150 (JP)**
  • **OKAMURA, Masaya**
    **Tokyo 100-6150 (JP)**
  • **SHIMA, Kousuke**
    **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, BASE STATION, AND COMMUNICATION METHOD**

(57)    A terminal includes: a reception unit configured to receive a control signal in downlink; and a control unit configured to expect that a control signal related to a search space having a same index is to be repeatedly received on different monitoring occasions.

FIG.20

5 MHz

CORESET#0    CORESET#0    CORESET#0    CORESET#0

TREATED AS A SINGLE PDCCH RECEPTION

EP 4 514 031 A1

**Description**

FIELD OF THE INVENTION

The present invention relates to a terminal, a base station, and a communication method in a wireless communication system.

BACKGROUND OF THE INVENTION

Regarding NR (New Radio) (also referred to as "5G"), or a successor system to LTE (Long Term Evolution), technologies have been discussed which satisfy the following requirements: a high capacity system, high data transmission rate, low delay, simultaneous connection of multiple terminals, low cost, power saving, etc. (for example, Non-Patent Document 1).

In LTE or NR, a UE category or a UE capability for the function-reduced IoT (Internet of Things) in which functions, such functions related/reception bandwidth part or the number of antennas, to be supported as mandatory by normal terminals are removed. For example, in LTE, eMTC (enhanced Machine Type Communication), NB-IoT (Narrow Band IoT) are defined, and, in NR, RedCap (Reduced Capability), etc., are defined.

In addition, discussions related to a future system later than 5G, or 6G, have been started. In the future system, further improvement of communication performance and wider variety of use cases are expected.

CITATION LIST

Non-Patent Document

Non-Patent Document 1: 3GPP TS 38.300 V16.8.0 (2021-12)

SUMMARY OF THE INVENTION

TECHNICAL PROBLEM

In the future systems (for example, NR release 18 and 6G that is an NR successor system), an eRedCap (enhanced Reduced Capability) in which functions are further reduced as compared with RedCap that is discussed in NR release 17 has been discussed. However, conventionally, how an eRedCap receives a control signal has been unclear.

The present invention has been made in view of the above points, and it is an object of the present invention to enable a terminal to appropriately receive a control signal in the wireless communication system.

SOLUTION TO PROBLEM

According to the disclosed technology, a terminal is provided. The terminal includes: a reception unit configured to receive a control signal in downlink; and a control unit configured to expect that a control signal related to a search space having a same index is to be repeatedly received on different monitoring occasions.

ADVANTAGEOUS EFFECTS OF INVENTION

According to the disclosed technique, a technique that enables a terminal to appropriately receive a control signal in a wireless communication system is provided.

BRIEF DESCRIPTION OF THE DRAWINGS

[Fig. 1] is a drawing for describing a wireless communication system related to an embodiment of the present invention.
[Fig. 2] is a first drawing for describing the conventional CORESET#0 resource configuration.
[Fig. 3] is a second drawing for describing the conventional CORESET#0 resource configuration.
[Fig. 4] is a third drawing for describing the conventional CORESET#0 resource configuration.
[Fig. 5] is a fourth drawing for describing the conventional CORESET#0 resource configuration.
[Fig. 6] is a fifth drawing for describing the conventional CORESET#0 resource configuration.
[Fig. 7] is a sixth drawing for describing the conventional CORESET#0 resource configuration.
[Fig. 8] is a seventh drawing for describing the conventional CORESET#0 resource configuration.

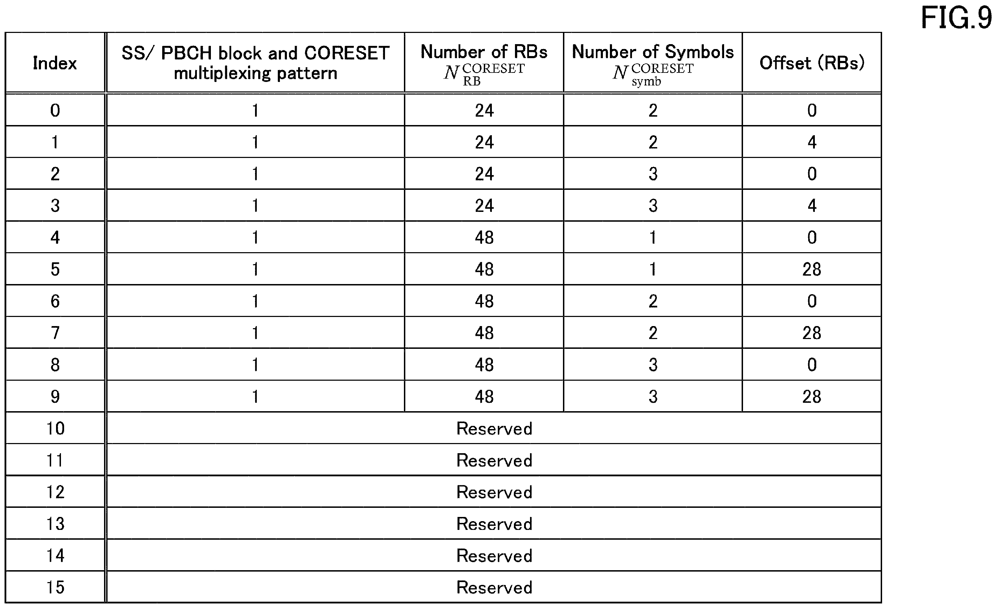

[Fig. 9] is an eighth drawing for describing the conventional CORESET#0 resource configuration.
[Fig. 10] is a drawing for describing the conventional CORESET#0 reception band.
[Fig. 11] is a first drawing for describing the CORESET#0 resource configuration related to Embodiment 1-1 of the embodiments of the present invention.
[Fig. 12] is a second drawing for describing the CORESET#0 resource configuration related to Embodiment 1-1 of the embodiments of the present invention.
[Fig. 13] is a third drawing for describing the CORESET#0 resource configuration related to Embodiment 1-1 of the embodiments of the present invention.
[Fig. 14] is a drawing for describing a configuration of monitoring occasions related to Embodiment 1-2 of the embodiments of the present invention.
[Fig. 15] is a drawing for describing a configuration of the number of PDCCH candidates related to Embodiment 2-1 of the embodiments of the present invention.
[Fig. 16] is a first drawing for describing a PDCCH reception method related to Embodiment 2-2 of the embodiments of the present invention.

[Fig. 17] is a second drawing for describing a PDCCH reception method related to Embodiment 2-2 of the embodiments of the present invention.

[Fig. 18] is a third drawing for describing a PDCCH reception method related to Embodiment 2-2 of the embodiments of the present invention.

[Fig. 19] is a fourth drawing for describing a PDCCH reception method related to Embodiment 2-2 of the embodiments of the present invention.

[Fig. 20] is a drawing for describing a PDCCH reception method related to Embodiment 3-1 of the embodiments of the present invention.

[Fig. 21] is a first drawing illustrating PDCCH reception quality that is simulated for each AL according to a PDCCH reception method related to Embodiment 3-1 of the embodiments of the present invention.

[Fig. 22] is a second drawing illustrating PDCCH reception quality that is simulated for each AL according to a PDCCH reception method related to Embodiment 3-1 of the embodiments of the present invention.

[Fig. 23] is a third drawing illustrating PDCCH reception quality that is simulated for each AL according to a PDCCH reception method related to Embodiment 3-1 of the embodiments of the present invention.

[Fig. 24] is a fourth drawing illustrating PDCCH reception quality that is simulated for each AL according to a PDCCH reception method related to Embodiment 3-1 of the embodiments of the present invention.

[Fig. 25] is a fifth drawing illustrating PDCCH reception quality that is simulated for each AL according to a PDCCH reception method related to Embodiment 3-1 of the embodiments of the present invention.

[Fig. 26] is a sixth drawing illustrating PDCCH reception quality that is simulated for each AL according to a PDCCH reception method related to Embodiment 3-1 of the embodiments of the present invention.

[Fig. 27] is a drawing for describing a PDCCH reception method related to Embodiment 3-2 of the embodiments of the present invention.

[Fig. 28] is a drawing illustrating an example of a functional structure of a base station related to an embodiment of the present invention.

[Fig. 29] is a drawing illustrating an example of a functional structure of a terminal related to an embodiment of the present invention.

[Fig. 30] is a drawing illustrating an example of a hardware structure of the base station or the terminal related to an embodiment of the present invention.

[Fig. 31] is a drawing illustrating an example of a structure of a vehicle related to an embodiment of the present invention.

DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by a base station 10 or a terminal 20 is configured.

(System configuration)

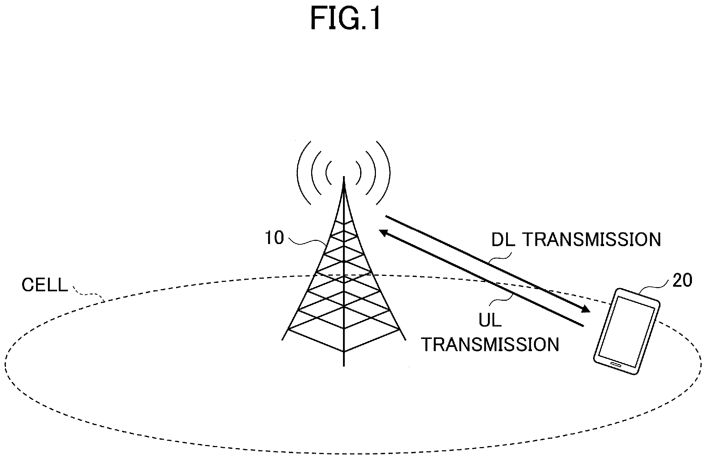

Fig. 1 is a drawing illustrating a wireless communication system related to an embodiment of the present invention.

As illustrated in Fig. 1, the wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. Note that the terminal 20 may be referred to as a UE, and the base station 10 may be referred to as a gNB.

(RedCap of NR release 17)

First, the conventional RedCap of NR release 17 will be described. The maximum bandwidth that is supported by a RedCap UE and that is being discussed in NR release 17 is 20 MHz in FR1 (Frequency Range 1) and 100 MHz in FR2 (Frequency Range 2). In addition, the RedCap UE is required to coexist with a non RedCap UE (hereinafter, also referred to as "non-RedCap UE") within the system.

In addition, a RedCap UE and a non-RedCap UE may be enabled to share the same initial DL-BWP (Downlink Bandwidth part) (including the subcarrier spacing, bandwidth, and position) configured by MIB (Master Information Block). On the other hand, an initial DL-BWP having a separate or added subcarrier spacing, bandwidth, and position for the RedCap UE may be configured.

The RedCap UE can share the initial DL-BWP for non-RedCap UE (hereinafter, also referred to as "DL-BWP#0") in a case where the maximum bandwidth supported by the RedCap UE is not exceeded.

In addition, in the NR release 17 technical specifications, in a case of TDD, a DL-BWP and a UL-BWP with the same index must have the same center frequency in order to avoid the RF retuning.

In addition, the RedCap UE expects that an initial DL-BWP and an active DL-BWP are to be equal to or less than the maximum DL bandwidth supported by the RedCap UE after the (re)establishment of the dedicated RRC connection. The RedCap UE is provided with a DL-BWP by "initialDownlinkBWP" in "DownlinkConfigCommonRedCapSIB", and is provided with a UL-BWP by "initialUplinkBWP" in "UplinkConfigCommonRedCapSIB". In a case where "initialUplinkBWP" in "UplinkConfigCommonRedCapSIB" indicates a UL-BWP that is larger than the maximum UL-BWP supported by the RedCap UE, the RedCap UE expects that a UL-BWP is to be provided by "initialUplinkBWP" in "UplinkConfigCommonRedCapSIB".

The RedCap UE may be provided with a DL-BWP by "BWP-DownlinkDedicated" other than the initial DL-BWP. The RedCap UE may be provided with a UL-BWP that is equal to or less than the maximum UL bandwidth supported by the RedCap UE by "BWP-UplinkDedicated" other than the initial UL-BWP.

In a case where the RedCap UE is provided with "RACH-ConfigCommon-RedCap" or "RACH-ConfigCommonTwoStepRA-RedCap", the RedCap UE performs an initial access and random access procedure by using the corresponding parameters. Otherwise, the RedCap UE uses the corresponding parameters provided by "RACH-ConfigCommon" or "RACH-ConfigCommonTwoStepRA".

In a case where the RedCap UE is provided with "initialUplinkBWP" by "UplinkConfigCommonRedCapSIB" and there is no dedicated PUCCH resource configuration, the RedCap UE transmits PUCCH with HARQ-ACK information by using the PUCCH resource set provided by "pucch-ResourceCommonRedCap". It is to be noted that the PUCCH transmission is disabled in a case where "disable-FH-PUCCH" is provided by "PUCCH-ConfigCommonRedCap".

With respect to the initial DL-BWP provided by "initialDownlinkBWP" in "DownlinkConfigCommonRedCapSIB", in a case where the RedCap UE monitors PDCCH according to the Type1-PDCCH CSS set and does not monitor PDCCH according to the Type2-PDCCH CSS set, the RedCap UE determines that the initial DL-BWP does not include SS/PBCH blocks or the CORESET with index 0.

In a case where the RedCap UE monitors PDCCH according to the Type2-PDCCH CSS set, the RedCap UE assumes that the initial DL-BWP includes an SS/PBCH block and the CORESET with an index 0 if the RedCap UE has obtained SIB1 by using the SS/PBCH block and assumes that the initial DL-BWP includes an SS/PBCH block and does not include the CORESET with an index 0 if the initial DL-BWP does not include the SS/PBCH block that the RedCap UE has used to obtain SIB1.

In a case of an active DL-BWP provided by "BWP-DownlinkDedicated", the RedCap UE assumes that the active DL-BWP includes an SS/PBCH block, unless the RedCap UE indicates a function of operating in the DL-BWP without receiving an SS/PBCH block, and does not include the CORESET with an index 0.

(RedCap of NR release 18)

Next, discussions on the RedCap of NR release 18 will be described. In the NR release 18, the eRedCap for further reducing the complexity of the RedCap UE for the NR release 17 is being discussed. Hereinafter, the function-reduced terminal for NR release 17 is referred to as a RedCap UE and the enhanced function-reduced terminal for NR release 18 is referred to as an eRedCap UE in order to distinguish the two function-reduced terminals. The RedCap UE is an example of the first function-reduced terminal. The eRedCap UE is an example of the second function-reduced terminal. In other words, the first function-reduced terminal is a terminal in which the first function is reduced and the second function-reduced terminal is a terminal in which the second function that is different from the first function (including a case in which the first function and the second function are partially overlapped) is reduced.

The impact on the network, co-existence of the RedCap UE or eRedCap UE with non-RedCap UE in a cell, impact on UE, impact on technical specifications, etc. are being discussed. The potential solutions, which may complement each other, for reducing the device complexity are focused on the following.

Reduction of the UE bandwidth in FR1 to 5 MHz is being discussed as the first solution. This solution may be combined with the relaxed UE processing timeline for PDSCH and/or PUSCH and/or CSI to be specified in the technical specifications.

The reduced UE peak data rate in FR1 is being discussed as the second solution. This solution may include the limited bandwidth for PDSCH and/or PUSCH, and may be combined with the relaxed UE processing timeline for PDSCH and/or PUSCH and/or CSI to be specified in the technical specifications.

It is to be noted that the following points are required to be taken into account with respect to the eRedCap UE. That is, the SSB that has been specified in the technical specifications of NR release 15 may be reused so that the L1 changes are minimized. In addition, the BWP operations with/without SSB and with/without RF retuning are required to be discussed. Furthermore, it is not precluded that some solutions for FR1 can be applied to FR2. In addition, defining a single release 18 function-reduced terminal type for further reducing the UE complexity is being discussed.

Next, the resource configuration of the conventional control resource set (CORESET#0 in particular) will be described by referring to the drawings.

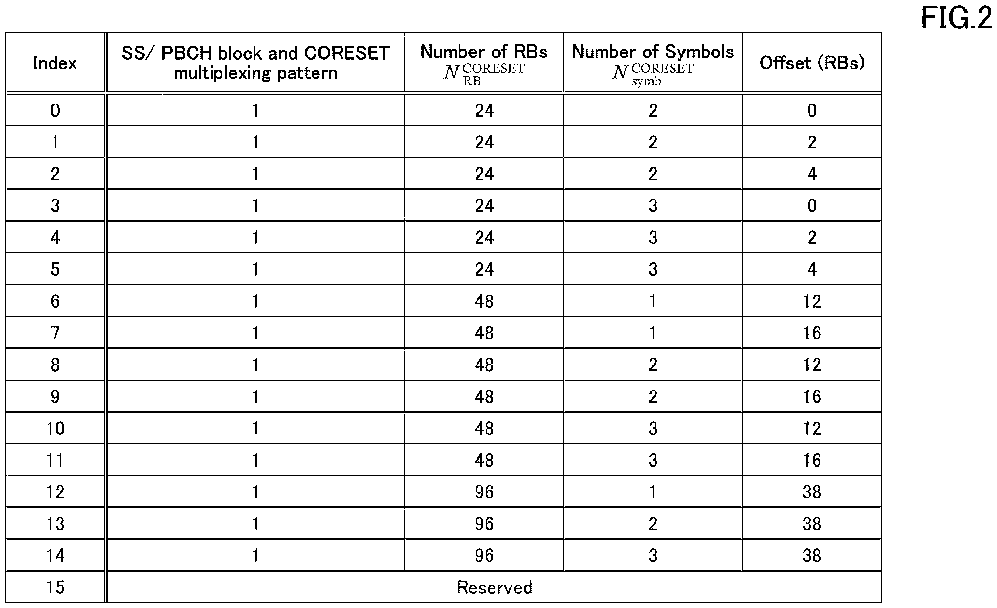

Fig. 2 is a first drawing for describing the conventional CORESET#0 resource configuration. Fig. 2 illustrates a set of resource blocks and slot symbols of CORESET for TypeO-PDCCH search space set configured for a case where SCSs of SSB and PDCCH are both 15 kHz in the frequency bands with minimum channel bandwidth 5 MHz or 10 MHz.

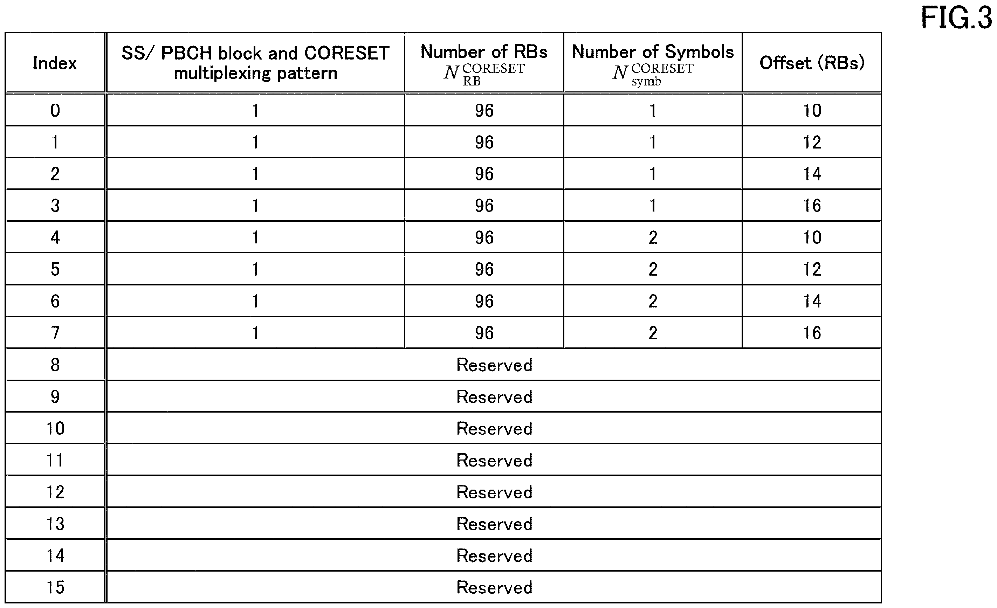

Fig. 3 is a second drawing for describing the conventional CORESET#0 resource configuration. Fig. 3 illustrates a set of resource blocks and slot symbols of CORESET for TypeO-PDCCH search space set configured for a case where SCSs of SSB and PDCCH are both 15 kHz in the frequency bands operated with shared spectrum channel access.

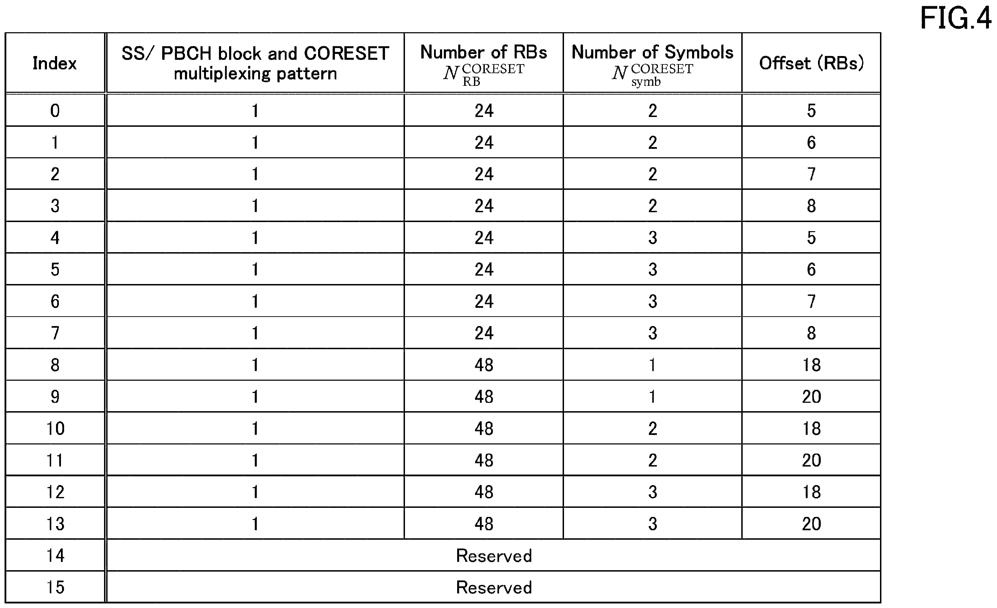

Fig. 4 is a third drawing for describing the conventional CORESET#0 resource configuration. Fig. 4 illustrates a set of resource blocks and slot symbols of CORESET for TypeO-PDCCH search space set configured for a case where SCS of SSB is 15 kHz and SCS of PDCCH is 30 kHz in the frequency bands with minimum channel bandwidth 5 MHz or 10 MHz.

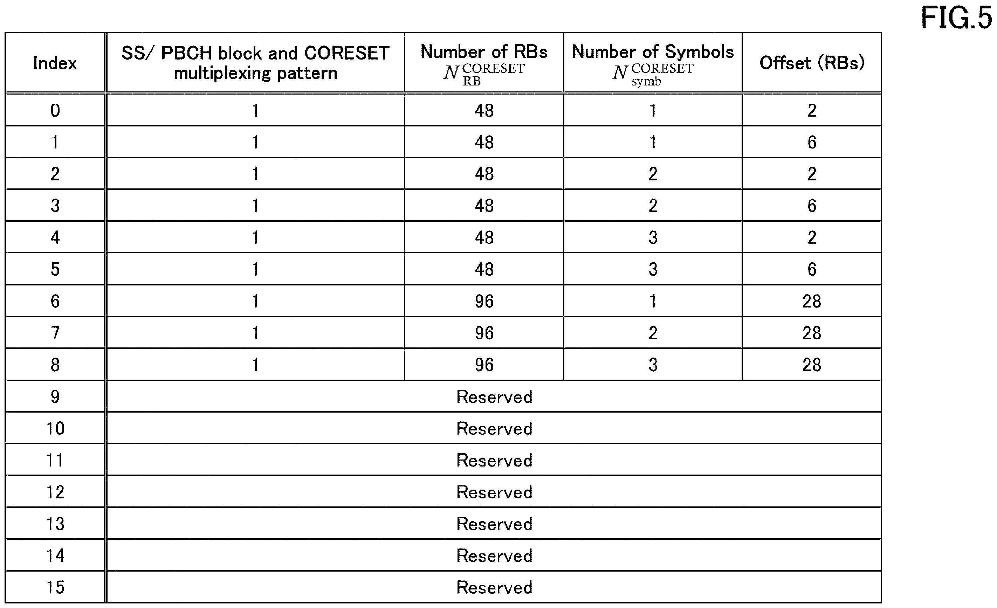

Fig. 5 is a fourth drawing for describing the conventional CORESET#0 resource configuration. Fig. 5 illustrates a set of resource blocks and slot symbols of CORESET for TypeO-PDCCH search space set configured for a case where SCS of SSB is 30 kHz and SCS of PDCCH is 15 kHz in the frequency bands with minimum channel bandwidth 5 MHz or 10 MHz.

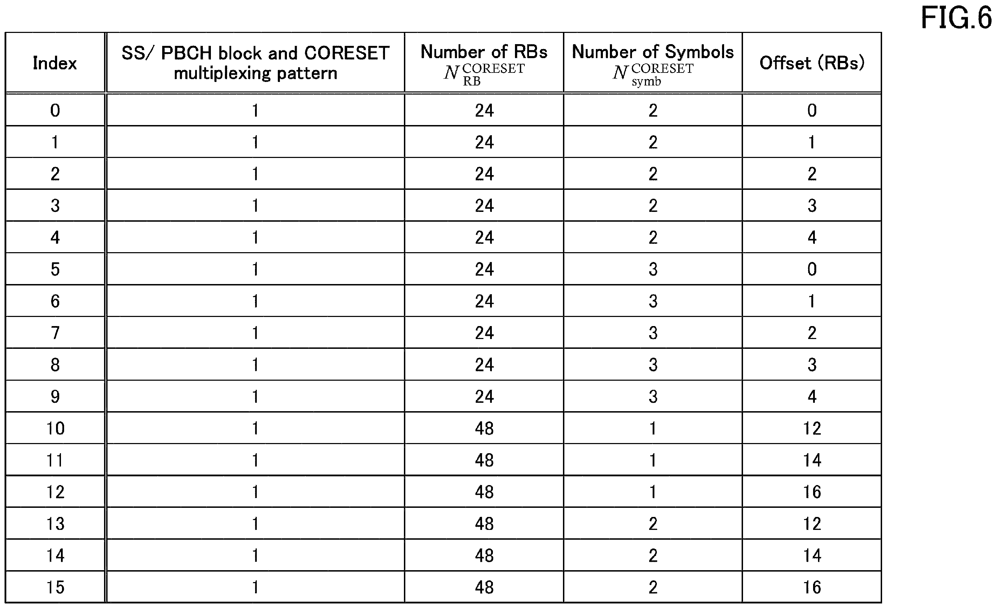

Fig. 6 is a fifth drawing for describing the conventional CORESET#0 resource configuration. Fig. 6 illustrates a set of resource blocks and slot symbols of CORESET for TypeO-PDCCH search space set configured for a case where SCSs of SSB and PDCCH are both 30 kHz in the frequency bands with minimum channel bandwidth 5 MHz or 10 MHz.

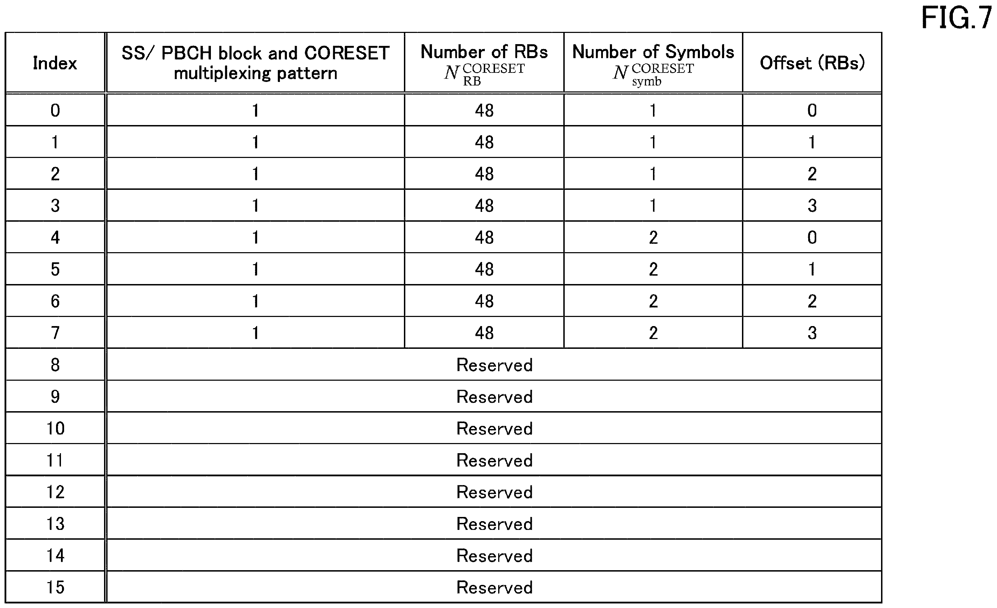

Fig. 7 is a sixth drawing for describing the conventional CORESET#0 resource configuration. Fig. 7 illustrates a set of resource blocks and slot symbols of CORESET for TypeO-PDCCH search space set configured for a case where SCSs of SSB and PDCCH are both 30 kHz in the frequency bands operated with shared spectrum channel access.

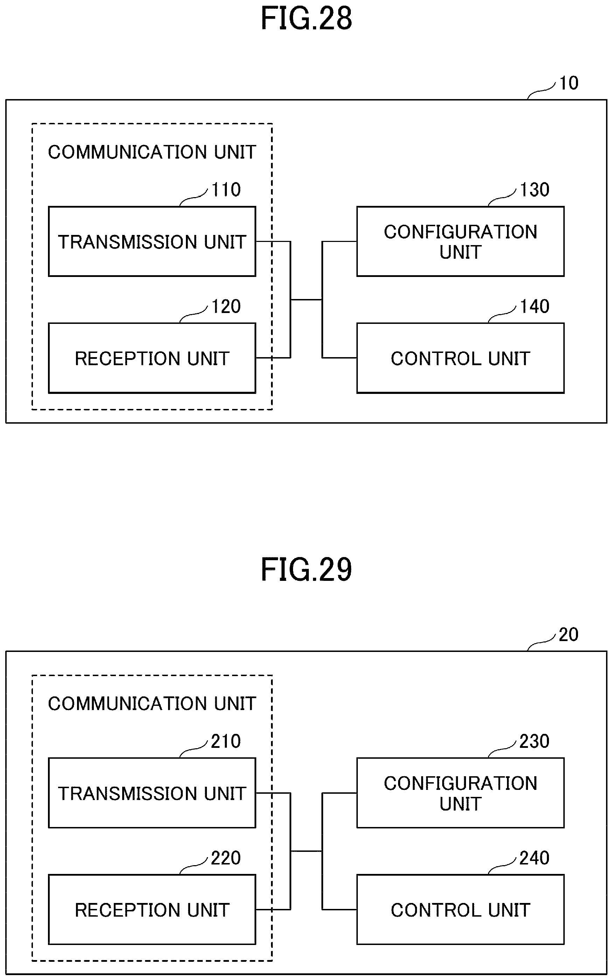

Fig. 28 is a seventh drawing for describing the conventional CORESET#0 resource configuration. Fig. 28 illustrates a set of resource blocks and slot symbols of CORESET for TypeO-PDCCH search space set configured for a case where SCS of SSB is 30 kHz and SCS of PDCCH is 15 kHz in the frequency bands with minimum channel bandwidth 40 MHz.

Fig. 29 is a eighth drawing for describing the conventional CORESET#0 resource configuration. Fig. 29 illustrates a set of resource blocks and slot symbols of CORESET for Type0-PDCCH search space set configured for a case where SCSs of SSB and PDCCH are both 30 kHz in the frequency bands with minimum channel bandwidth 40 MHz.

As described above, the CORESET resources for Type0-PDCCH CSS reception are determined according to SCSs of SSB and PDCCH and the minimum channel bandwidth.

(Problem of conventional technique)

Next, the problem of the conventional technique will be described.

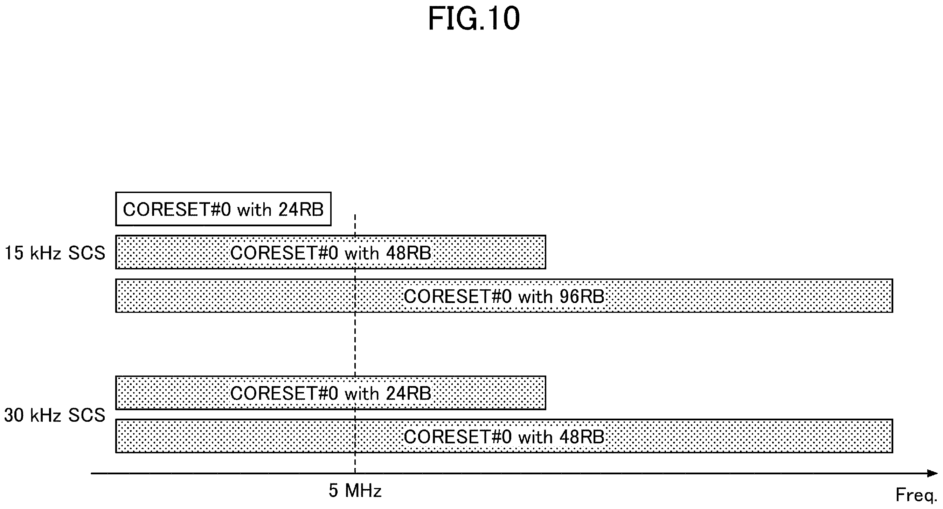

Fig. 10 is a drawing for describing the conventional CORESET#0 reception band. In the conventional technical specifications, the band of CORESET exceeds 5 MHz except for a case where SCS is 15 kHz and the number of RBs is 24. Therefore, there is a problem that the eRedCap UE cannot receive CORESET#0 in a case where the maximum bandwidth is 5 MHz.

Specifically, as a first problem, there is a problem that, in a case where the RedCap UE and the non-RedCap UE (hereinafter, RedCap UE and/or non-RedCap UE are/is also referred to as non-eRedCap UE) share the CORESET#0 configured by MIB, if the configuration is limited to 15 kHz SCS/24 RBs, the CORESET#0 configuration for the non-eRedCap UE is also required to be limited.

As a second problem, there is a problem that the flexibility of the CORESET#0 resource configuration for the eRedCap UE is reduced depending on the method of resolution to the first problem.

As a third problem, there is a problem that there is a concern for reduced reliability or reduced coverage because CCE (Control Channel Element) AL (Aggregation Level) 16 cannot be supported. In addition, it is possible to introduce the CORESET#0 with smaller number of RBs such as PDCCH puncturing or AL2 with respect to the second problem. In this case, however, there is a problem that there is a possibility of being unable to achieve the performance that is guaranteed by the conventional technical specifications.

(Overview of embodiment)

Accordingly, in an embodiment of the present invention, an operation of receiving, by the eRedCap UE, the CORESET#0 resources and type0-PDCCH CSS will be described. Hereinafter, embodiments from embodiment 1 to embodiment 3 will be described. It is to be noted that the terminal 20 in each of the embodiments is an eRedCap UE unless otherwise stated.

First, definitions of the RedCap UE, eRedCap UE, and non-RedCap UE will be described.

The definition of the RedCap UE may be any one of the following 1) to 3), or may be another definition.

1) UE that has indicated that the UE itself is a RedCap UE to the network via one of Msg.1/3/A. For example, the Msg.1/A may be transmitted using a resource that is defined or configured for the RedCap UE, or an indication field in Msg3 that is defined or configured for the RedCap UE may be used for indicating that the UE itself is a RedCap UE.

2) UE that supports a specific UE capability. For example, the specific UE capability may be a UE capability of supporting up to 20 MHz bandwidth in FR1 and up to 100 MHz bandwidth in FR2. In addition, the specific UE capability may be a UE capability of supporting one or two reception branches and may be UE capability of supporting the maximum number of DL-MIMO layers corresponding to the supported number of reception branches. In addition, the specific UE capability may be a UE capability of supporting one of FD-FDD (Full Duplex-Frequency Division Duplex) operation or Type A HD-FDD (Half Duplex-Frequency Division Duplex) operation in the FR1 FDD bands. In addition, the specific UE capability may be a UE capability of supporting one of DL up to 64 QAM (Quadrature amplitude modulation) or DL up to 256 QAM in FR1. In addition, the specific UE capability may be a UE capability of not supporting CA and/or DC.

3) UE that has reported to support the specific UE capability described in the above-described 2) to the network.

In addition, the definition of the eRedCap UE may be one of 1) to 3) below, or may be a different definition.

1) UE that has indicated that the UE itself is an eRedCap UE to the network via one of Msg.1/3/A. For example, the Msg.1/A may be transmitted using a resource that is defined or configured for the eRedCap UE, or an indication field in Msg3 that is defined or configured for the eRedCap UE may be used for indicating that the UE itself is an eRedCap UE.

2) UE that supports a specific UE capability. For example, the specific UE capability may be a UE capability of supporting up to 5 MHz bandwidth in FR1. In addition, the specific UE capability may be a UE capability of supporting the relaxed UE processing timeline for PDSCH and/or PUSCH and/or CSI. In addition, the specific UE capability may be a UE capability of supporting the reduced UE peak data rate in FR1. In addition, the specific UE capability may be a UE capability of supporting one or two reception branches and may be UE capability of supporting the maximum number of DL-MIMO layers corresponding to the supported number of reception branches. In addition, the specific UE capability may be a UE capability of supporting one of FD-FDD (Full Duplex-Frequency Division Duplex) operation or Type A HD-FDD (Half Duplex-Frequency Division Duplex) operation in the FR1 FDD bands. In addition, the specific UE capability may be a UE capability of supporting one of DL up to 64 QAM (Quadrature amplitude modulation) or DL up to 256 QAM in FR1. In addition, the specific UE capability may be a UE capability of not supporting CA and/or DC.

3) UE that has reported to support the specific UE capability described in the above-described 2) to the network.

In addition, the terminal 20 may report the UE capability indicating whether or not to support a function described in each of the following embodiments. For example, the terminal 20 may report the UE capability indicating whether or not to support a function of using an initial DL/UL-BWP that is different from that for the non-RedCap UE or the RedCap UE. In addition, the UE that has reported to support the function may be an eRedCap UE, or an eRedCap UE optionally supports the function.

In addition, the non-RedCap UE may be defined as a UE that does not correspond to the definition of the RedCap UE or the definition of the eRedCap UE, may be a UE that supports a function that is supported as a mandatory function by a normal UE, or may be a UE that supports a bandwidth exceeding the maximum bandwidth supported by the RedCap UE.

(Embodiment 1)

In this embodiment, an example will be described in which the flexible CORESET#0 resource configuration between the eRedCap UE and the non-eRedCap UE is implemented. This embodiment is a solution mainly to the above-described first problem.

(Embodiment 1-1)

The terminal 20 may expect that the CORESET#0 resources are to be configured for the eRedCap UE separately from the configuration for the non-eRedCap UE.

The terminal 20 may expect that the CORESET#0 resources for the eRedCap UE are to be defined in the technical specifications. For example, regardless of the value configured by "pdcch-configSIB1" of MIB, the terminal 20 may expect that, with respect to the CORESET#0 resources, the number of RBs is to be 24, the number of symbols is to be 2 or 3, and the RB offset is to be one of 0/1/2/3/4. It is to be noted that the above-described number of RBs, the number of symbols, and the value of the RB offset are examples and may be other values.

The terminal 20 may expect that different CORESET#0 resources between the eRedCap UE and the non-eRedCap UE are to be indicated in the same CORESET#0 resource table. For example, the terminal 20 may expect that resources for the eRedCap UE are to be newly defined in the "reserved" rows.

For example, the terminal 20 may expect that the CORESERT#0 resources with the number of RBs being 24 are to be defined in the "reserved" rows in the CORESET#0 resource table illustrated in Fig. 3.

In addition, the terminal 20 may expect that the CORESERT#0 resources with the number of RBs being 24 are to be defined in the "reserved" rows in the CORESET#0 resource table illustrated in Fig. 5.

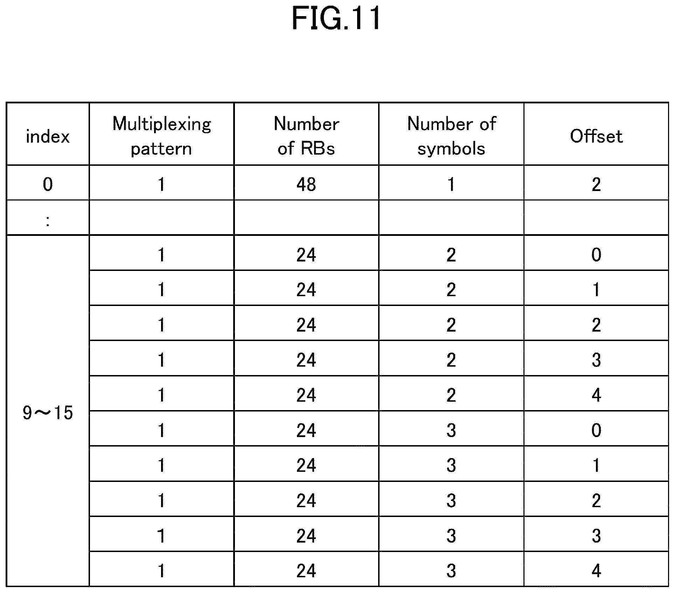

Fig. 11 is a first drawing for describing the CORESET#0 resource configuration related to Embodiment 1-1 of the embodiments of the present invention. Fig. 11 illustrates an example in which the CORESERT#0 resources with the number of RBs being 24 are defined in the "reserved" rows, or 9th to 15th rows, in the CORESET#0 resource table illustrated in Fig. 5.

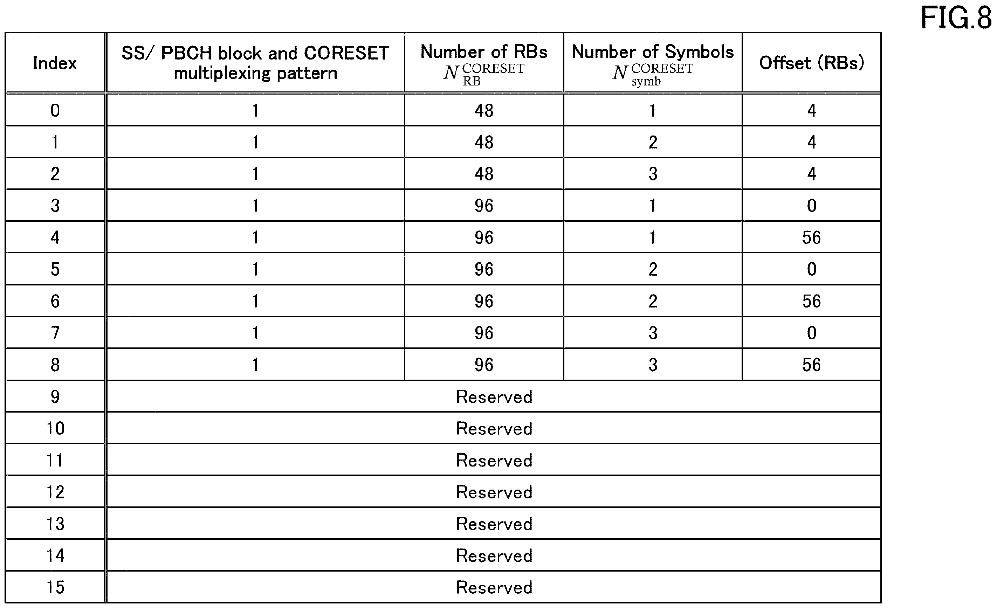

In addition, the terminal 20 may expect that the CORESERT#0 resources with the number of RBs being 24 are to be defined in the "reserved" rows in the CORESET#0 resource table illustrated in Fig. 8.

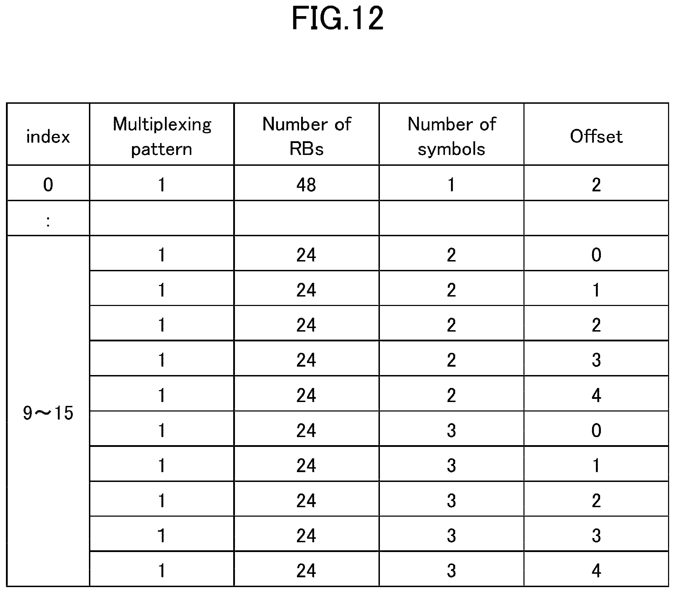

Fig. 12 is a second drawing for describing the CORESET#0 resource configuration related to Embodiment 1-1 of the embodiments of the present invention. Fig. 12 illustrates an example in which the CORESERT#0 resources with the number of RBs being 24 are defined in the "reserved" rows, or 9th to 15th rows, in the CORESET#0 resource table illustrated in Fig. 8.

It is to be noted that the defined number of CORESERT#0 resource RBs may be 24 or may be a value smaller than this (for example, 12).

The terminal 20 may expect that the indication method of the CORESET#0 resource index for the eRedCap UE is to be one of the following options.

<Option 1>

The terminal 20 may expect that the resource index for the eRedCap UE is to be indicated by a reserved bit of MIB. For example, the terminal 20 may expect that which one of resources with indexes 0 to 3 is to be used is to be indicated by two bits of the reserved bits in a case where the CORESET#0 resource table illustrated in Fig. 2 is referred to.

In addition, the terminal 20 may expect that which one of resources with indexes 9 to 15 is to be used is to be indicated by two bits of the reserved bits in a case where the CORESET#0 resource table illustrated in Fig. 5 or Fig. 8 is referred to.

<Option 2>

The terminal 20 may perform replacement of the resource indicated by "pdcch-configSIB1" of MIB. For example, the terminal 20 may perform replacement of the number of RBs with 24 when one of the resources with indexes 6 to 14 is indicated in a case where the CORESET#0 resource table illustrated in Fig. 2 is referred to.

In addition, the terminal 20 may perform replacement of the number of RBs with 24 regardless of the indicated index in a case where the CORESET#0 resource table illustrated in Fig. 5 or Fig. 8 is referred to.

In addition, in a case where the CORESET#0 resource table illustrated in Fig. 2 is referred to, when a resource having one of the indexes 6 to 14 is indicated, the terminal 20 may replace the resource with a resource having one of the indexes 0 to 5.

In addition, in a case where the CORESET#0 resource table illustrated in Fig. 5 or Fig. 8 is referred to, when a resource having one of the indexes 0 to 8 is indicated, the terminal 20 may replace the resource with one of the newly defined resources having indexes 9 to 15.

<Option 3>

The terminal 20 may perform an operation of a combination of operations of Option 1 and Option 2.

For example, the terminal 20 may identify the CORESET#0 index according to four bits obtained by combining two bits of the reserved bits and two bits (LSB (Least Significant Bit) or MSB (Most Significant Bit)) that are indicated by "pdcch-configSIB 1".

In addition, the terminal 20 may refer to the CORESET#0 resource tables that are different from each other between the eRedCap UE and the non-eRedCap UE.

The terminal 20 may assume that the SCS of the CORESET#0/SIB1 is to be 15 kHz SCS regardless of the value indicated by "subCarrierSpaceCommon" of MIB.

In addition, the terminal 20 may expect that a new CORESET#0 resource table for the eRedCap UE is to be defined in the technical specifications.

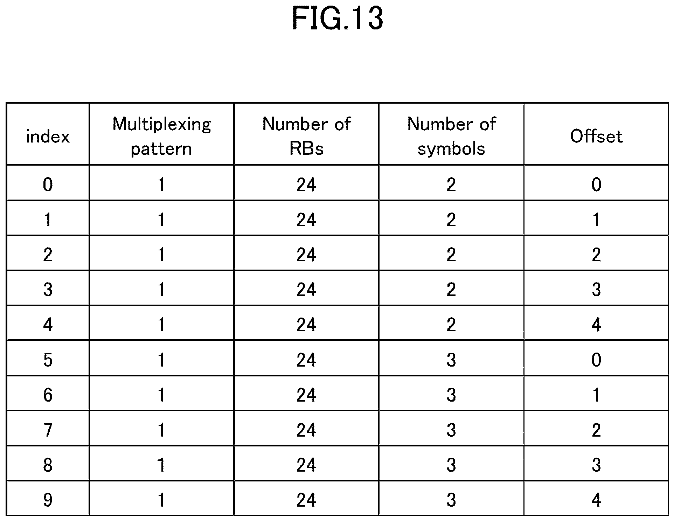

Fig. 13 is a third drawing for describing the CORESET#0 resource configuration related to Embodiment 1-1 of the embodiments of the present invention. The number of newly configured CORESET#0 resource RBs may be 24 or may be a value smaller than this (12, or the like).

The new CORESET#0 resource tables may be expected to be defined with respect to one of or a plurality of the following combinations of {SCS of SSB, SCS of PDCCH, minimum value of CBW (Channel Band Width)} in the technical specification.

- {15 kHz, 15 kHz, 5 MHz}
- {15 kHz, 15 kHz, 5 or 10 MHz}
- {15 kHz, 15 kHz, 40 MHz}
- {30 kHz, 15 kHz, 5 MHz}
- {30 kHz, 15 kHz, 5 or 10 MHz}
- {30 kHz, 15 kHz, 40 MHz}

The terminal 20 may expect that the indication method of the CORESET#0 resource index for the eRedCap UE is to be one of the following options.

<Option 1>

The terminal 20 may expect that the resource index for the eRedCap UE is to be indicated by reserved bits of MIB.

<Option 2>

The terminal 20 may apply the resource index indicated by "pdcch-configSIB1" of MIB.

<Option 3>

The terminal 20 may perform an operation in which the above-described options are combined. For example, the terminal 20 may identify the CORESET#0 resource index according to four bits obtained by combining two bits of the reserved bits and two bits (LSB or MSB) that are indicated by "pdcch-configSIB1".

(Embodiment 1-2)

The terminal 20 may expect that the CORESET#0 configuration for the eRedCap UE is to be indicated separately from the configuration for the non-eRedCap UE.

<Option 1>

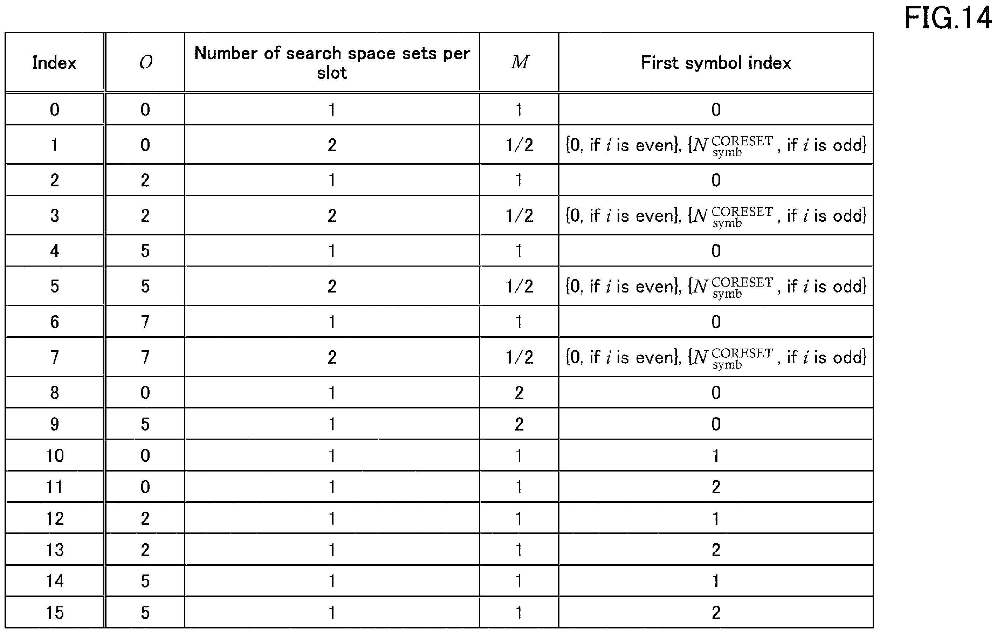

The terminal 20 may expect that different configurations of monitoring occasions between the eRedCap UE and the non-eRedCap UE in the table illustrated in Fig. 14 are to be indicated.

Fig. 14 is a drawing for describing a configuration of monitoring occasions related to Embodiment 1-2 of the embodiments of the present invention. Fig. 14 is a table illustrating relationship between: the parameters for PDCCH monitoring occasion for TypeO-PDCCH CSS set; and the SS/PBCH block and CORESET multiplexing pattern 1 and FR1

<Option 2>

The terminal 20 may expect that the monitoring occasions related to the TypeO-PDCCH CSS are to be newly defined for the eRedCap UE. The terminal 20 may expect that the indication method of parameters for the monitoring occasion configuration related to the TypeO-PDCCH CSS for the eRedCap UE is to be one of the following options.

<Option 2-1>

The terminal 20 may expect that an index of the monitoring occasion configuration for the eRedCap UE is to be indicated by reserved bits of MIB.

<Option 2>

The terminal 20 may apply the resource index indicated by "pdcch-configSIB1" of MIB.

<Option 3>

The terminal 20 may perform an operation in which the above-described options are combined. For example, the terminal 20 may identify the index of the monitoring occasion configuration for the eRedCap UE according to four bits obtained by combining two bits of the reserved bits and two bits (LSB or MSB) that are indicated by "pdcch-configSIB1".

According to Embodiment 1, the CORESET#0 resource or search space #0 for the eRedCap UE is configured separately from the configuration for the non-eRedCap UE. According to the above-described operation, flexible configurations between the eRedCap UE and the non-eRedCap UE can be performed.

(Embodiment 2)

In this embodiment, an example will be described in which the flexible configuration for the eRed-Cap UE can be performed.

First, the conventional method of determining Type0-PDCCH CSS monitoring occasions will be described. The relationship between the SSB in the NR release 15 multiplexing pattern 1 and the Type0-PDCCH CSS slot $n_0$ is defined as shown below.

$$n_0 = (O \cdot 2^\mu + [i \cdot M]) \bmod N_{slot}^{frame,\mu}$$

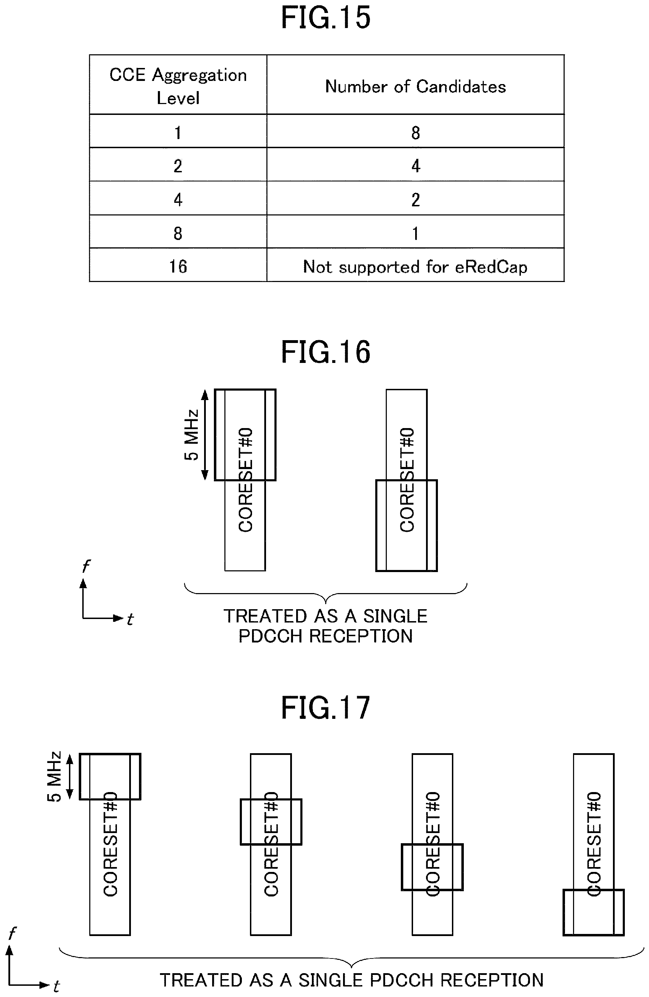

Here, O and M are specified in the table illustrated in Fig. 16. $N_{slot}^{frame,\mu}$ is the number of slots per frame in a case where SCS is $2^\mu$.

In a case of the multiplexing pattern 1, the terminal monitors two consecutive slots (that is, $n_0$ and $n_0+1$ slots). The $n_0$ and $n_0+1$ slots are monitored for the SSB/CORESET#0 multiplexing pattern 1.

(Embodiment 2-1)

The terminal 20 may expect that the frequency resources of the CORESET#0 for the eRedCap UE are to be newly defined.

With respect to the frequency resources of the CORESET#0, the terminal 20 may expect that the number of RBs that is smaller than 24 is to be configured. For example, 12 RBs may be expected to be configured (the CORESET#0 can be received even in a case where SCS is 30 kHz).

The terminal 20 may expect that the Type0a-PDCCH CSS CCE aggregation levels and/or the number of PDCCH candidates for each CCE aggregation level are to be newly defined for the eRedCap UE.

Fig. 15 is a drawing for describing a configuration of the number of PDCCH candidates related to Embodiment 2-1 of the embodiments of the present invention. Fig. 15 illustrates a configuration of the CCE aggregation level and the maximum number of PDCCH candidates for each CCE aggregation level for CSS sets configured by "searchSpaceSIB1" for the eRedCap UE. The terminal 20 may expect that AL1 and/or AL2 are/is to be supported for the Type0-PDCCH CSS CCE aggregation level (AL).

(Embodiment 2-2)

The terminal 20 may expect that PDCCH is to be received in the CORESET#0 exceeding 5 MHz.

<Option 1>

The terminal 20 may receive partially-punctured PDCCH/PDCCH-DMRS by using the bandwidth of 5 MHz.

<Option 2>

The terminal 20 may expect that PDCCH being received by using a plurality of divided receptions is to be defined in the technical specifications. For example, with respect to the CORESET#0 type0-PDCCH CSS, the terminal 20 may receive PDCCH by using a plurality of different resources to be combined in the terminal 20 to be treated as a single PDCCH reception.

Fig. 16 is a first drawing for describing a PDCCH reception method related to Embodiment 2-2 of the embodiments of the present invention. In this case, with respect to the CORESET#0 type0-PDCCH CSS, the terminal 20 may receive PDCCH by using two different resources to be combined in the terminal 20 to be treated as a single PDCCH reception.

Fig. 17 is a second drawing for describing a PDCCH reception method related to Embodiment 2-2 of the embodiments of the present invention. In this case, with respect to the CORESET#0 type0-PDCCH CSS, the terminal 20 may receive PDCCH by using 4 different resources to be combined in the terminal 20 to be treated as a single PDCCH reception.

The base station 10 may transmit a plurality of times of PDCCHs with the same search space ID in a case of a cell in which an eRedCap UE is accommodated (including a case in which a part of accommodated terminals 20 is an eRedCap UE).

In addition, the terminal 20 may expect that the monitoring occasions related to the Type0-PDCCH CSS are to be transmitted by using two or more slots. The terminal 20 may expect that monitoring of slots of one or more slots in addition to a slot $n_0$ that is associated with the ID of the received SSB is to be defined in the technical specifications. At this time, the slot $n_0$ and the additional

monitoring slots are not required to be contiguous.

Option 2 is not limited to be applied to the PDCCH reception in the CORESET#0 but may be applied to the PDCCH reception in another CORESET.

The terminal 20 may expect that Option 2 is not limited to be applied to the PDCCH reception related to the type0-PDCCH CSS and is to be applied to another SS (for example, at least one of type0/0A/1/2/3 CSS/USS).

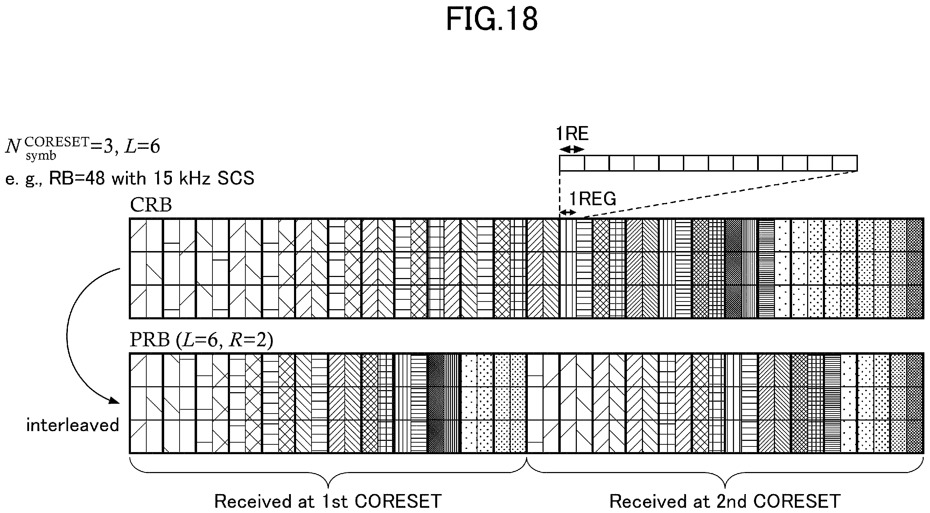

Fig. 18 is a third drawing for describing a PDCCH reception method related to Embodiment 2-2. Fig. 18 illustrates an example of interleaved PDCCH in a case where $N_{symb}^{CORESET}=3$ and L=6.

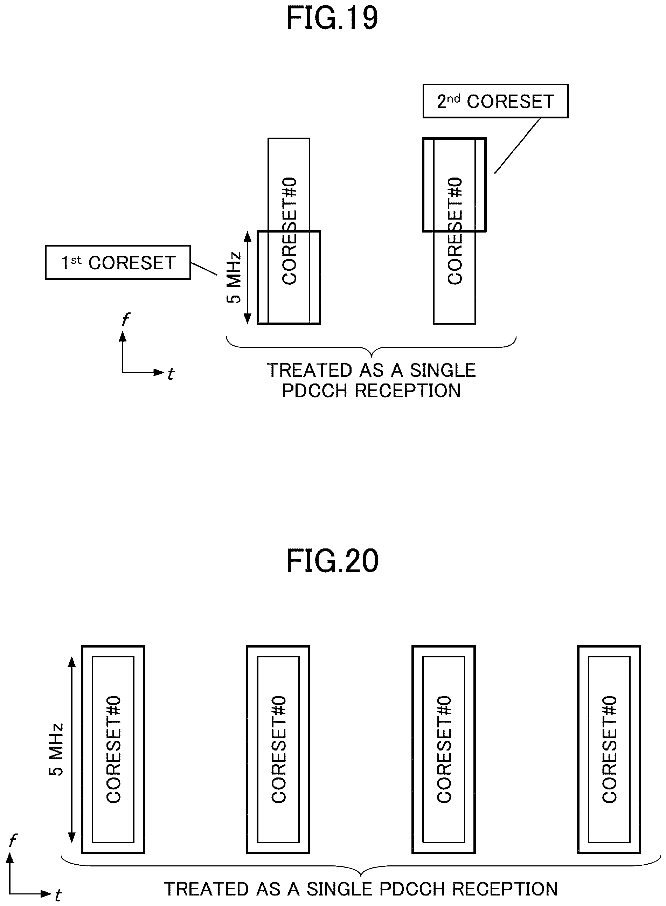

Fig. 19 is a fourth drawing for describing a PDCCH reception method related to Embodiment 2-2. As illustrated in Fig. 18 and Fig. 19, the terminal 20 can restore a single PDCCH by using signals obtained by two receptions.

In addition, the terminal 20 may expect that the non-interleaved mapping is to be applied to the CORESET#0 PDCCH. According to an operation described above, the number of monitoring occasions required for receiving the entirety of a single PDCCH can be reduced.

According to Embodiment 2, a flexible configuration for the eRedCap UE can be achieved.

(Embodiment 3)

An example of supplementing coverage related to PDCCH for the eRedCap UE will be described.

(Embodiment 3-1)

The terminal 20 may receive a single PDCCH repeatedly on different monitoring occasions.

Fig. 20 is a drawing for describing a PDCCH reception method related to Embodiment 3-1 of the embodiments of the present invention. For example, the terminal 20 may receive PDCCH related to a search space having the same index repeatedly on four monitoring occasions.

The terminal 20 may expect that an operation related to this embodiment is to be applied only to the CORESET#0 PDCCH reception or is to be applied to other CORESETs.

The terminal 20 may expect that the number of repeated PDCCH receptions is to be indicated by the technical specifications or by an upper layer parameter in order to guarantee the coverage. The number of repeated receptions may vary depending on the AL/SS type or the DCI format.

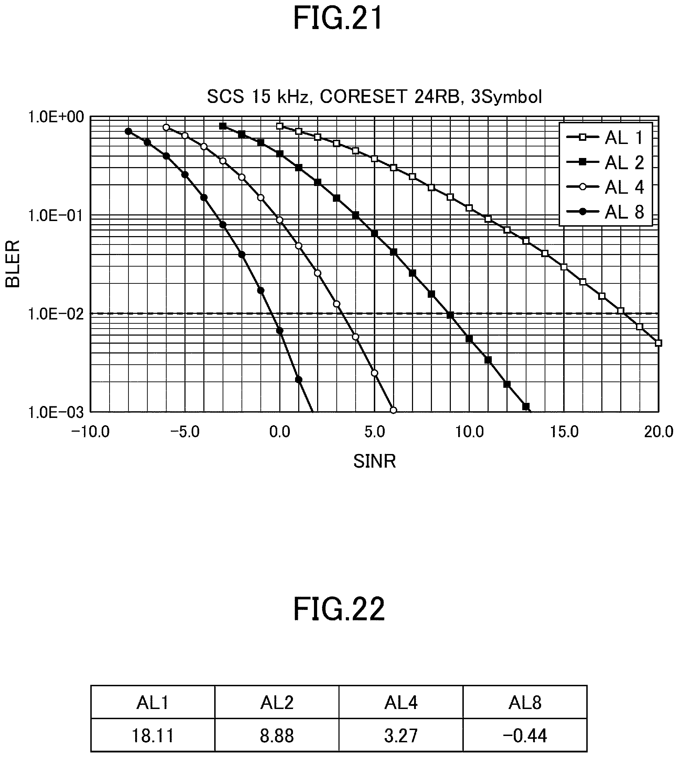

Fig. 21 is a first drawing illustrating PDCCH reception quality that is simulated for each AL according to a PDCCH reception method related to Embodiment 3-1 of the embodiments of the present invention.

Fig. 22 is a second drawing illustrating PDCCH reception quality that is simulated for each AL according to a PDCCH reception method related to Embodiment 3-1 of the embodiments of the present invention.

Fig. 21 and Fig. 22 illustrate the simulation results of the reception quality for each AL in a case of SCS being 15 kHz, CORESET being 24 RBs and 3 symbols for a case of the number of repetitions being 1, that is, no execution of repeated reception.

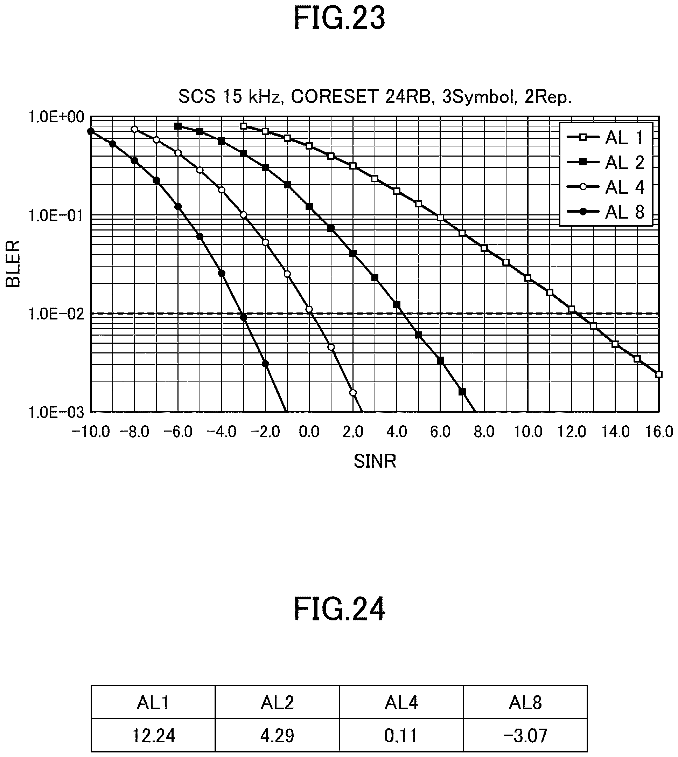

Fig. 23 is a third drawing illustrating PDCCH reception quality that is simulated for each AL according to a PDCCH reception method related to Embodiment 3-1 of the embodiments of the present invention.

Fig. 24 is a fourth drawing illustrating PDCCH reception quality that is simulated for each AL according to a PDCCH reception method related to Embodiment 3-1 of the embodiments of the present invention.

Fig. 23 and Fig. 24 illustrate the simulation results of the reception quality for each AL in a case of SCS being 15 kHz, CORESET being 24 RBs and 3 symbols for a case of the number of repetitions being 2, that is, every reception being executed twice.

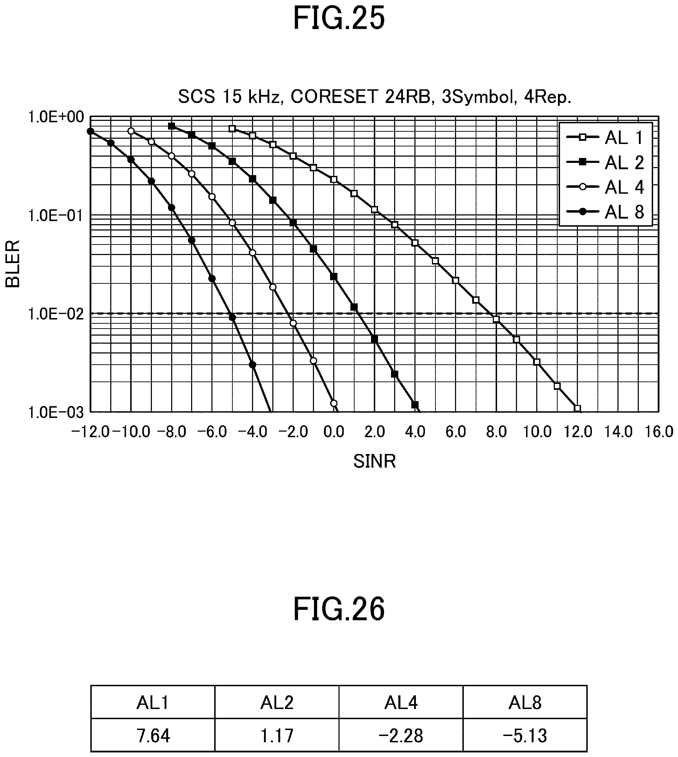

Fig. 25 is a fifth drawing illustrating PDCCH reception quality that is simulated for each AL according to a PDCCH reception method related to Embodiment 3-1 of the embodiments of the present invention.

Fig. 26 is a sixth drawing illustrating PDCCH reception quality that is simulated for each AL according to a PDCCH reception method related to Embodiment 3-1 of the embodiments of the present invention.

Fig. 25 and Fig. 26 illustrate the simulation results of the reception quality for each AL in a case of SCS being 15 kHz, CORESET being 24 RBs and 3 symbols for a case of the number of repetitions being 4, that is, every reception being executed four times.

According to the simulation results of Figs. 21 to 26, as the number of repetitions is increased from 1 to 2 and from 2 to 4, the SINR accumulation is suppressed and the reception quality improvement is obtained.

(Embodiment 3-2)

The terminal 20 may expect that the CORESET exceeding 3 symbols is to be supported for the eRedCap UE.

According to an operation described above, even in a case where frequency resources are limited, the higher AL can be supported by increasing the resources in the time direction, and thus, reliability can be increased.

Embodiment 3-2 may be applied only to the CORESET#0, or may be applied to other CORESETs. For example, the terminal 20 may expect that the CORESET time resources to be newly introduced for the eRedCap UE are to be 4 and/or 6 symbols.

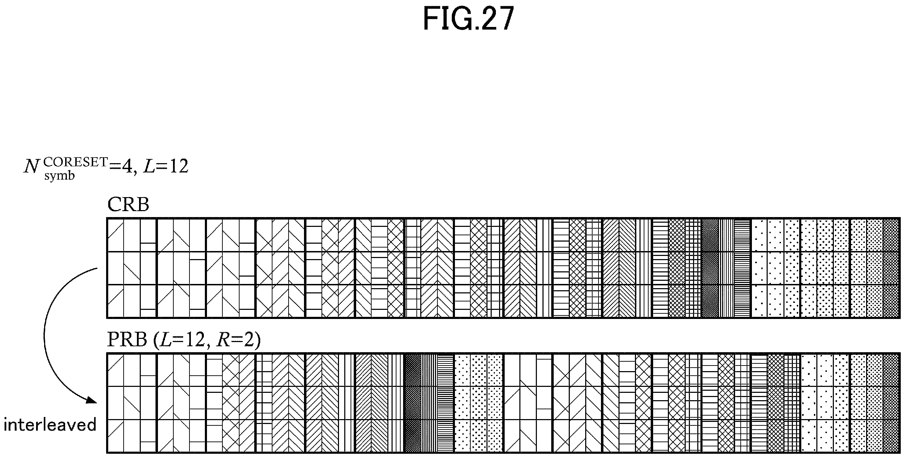

Fig. 27 is a drawing for describing a PDCCH reception method related to Embodiment 3-2 of the embodiments of the present invention. The terminal 20 may expect that the bundle size L is to be enhanced for the eRedCap UE. For example, Fig. 27 illustrates the interleaved mapping of PDCCH in a case of L=12 enhancement.

According to Embodiment 3, the coverage complementation related to PDCCH for the eRedCap UE can be performed.

With respect to the cases in which the CORESET#0 design or the PDCCH reception method according to an embodiment of the present invention is applied, the cases may be limited to one of or a plurality of the following cases (different options may be applied in accordance with the following scenarios).

- Serving cell or non serving cell
- The RRC connection state being idle/inactive/connected mode
- Type0/0A/1(with RRC or without RRC)/2/3 CSS or USS
- DCI format 0_0/0_1/1_0/1_1/0_2/1_2/2_0/2_1/2_2/2_3/2_4/2-_5/2_6

(Device configuration)

Next, a functional configuration example of the base station 10 and the terminal 20 for performing the processes and operations described above will be described.

<Base station 10>

Fig. 28 is a diagram illustrating an example of a functional configuration of the base station 10. As shown in Fig. 28, the base station 10 includes a transmission unit 110, a reception unit 120, a configuration unit 130, and a control unit 140. The functional configuration illustrated in Fig. 28 is merely an example. Functional divisions and names of functional units may be anything as long as operations according to an embodiment of the present invention can be performed. Further, the transmission unit 110 and the reception unit 120 may be combined and may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, DCI via PDCCH, data via PDSCH, and the like, to the terminal 20.

The configuration unit 130 stores preset configuration information and various configuration information items to be transmitted to the terminal 20 in a storage device included in the setting unit 130 and reads the preset configuration information from the storage apparatus if necessary.

The control unit 140 performs scheduling of the terminal 20 for DL reception or UL transmission, via the transmission unit 110. In addition, the control unit 140 includes a function of performing LBT. The functional units related to signal transmission in the control unit 140 may be included in the transmission unit 110, and the functional units related to signal reception in the control unit 140 may be included in the reception unit 120. Further, the transmission unit 110 may be referred to as a transmitter, and the reception unit 120 may be referred to as a receiver.

<Terminal 20>

Fig. 29 is a diagram illustrating an example of a functional configuration of the terminal 20. As shown in Fig. 29, the terminal 20 includes a transmission unit 210, a reception unit 220, a configuration unit 230, and a control unit 240. The functional configuration illustrated in Fig. 29 is merely an example. Functional divisions and names of functional units may be anything as long as operations according to an embodiment of the present invention can be performed. the transmission unit 210 and the reception unit 220 may be combined and may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the reception unit 220 has a function of receiving NR-PSS, NR-SSS, NR-PBCH, DL/UL/SL control signals, DCI via PDCCH, data via PDSCH, etc., transmitted from the base station 10. In addition, for example, with respect to the D2D communications, the transmission unit 210 may transmit, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 120 may receive, from the another terminal 20, PSCCH, PSSCH, PSDCH, or PSBCH.

The configuration unit 230 stores various configuration information items received from the base station 10 or the another terminal by the reception unit 220 in the storage device included in the configuration unit 230, and reads them from the storage device as necessary. In addition, the configuration unit 230 also stores pre-configured configuration information. The control unit 240 controls the terminal 20. In addition, the control unit 240 includes a function of performing LBT.

A terminal according to an embodiment of the present invention may be configured as a terminal described in each item below. In addition, a communication method below may be performed.

<Configuration related to an embodiment of the present invention>

(First item)

A terminal including:

a reception unit configured to receive a control signal in downlink; and
a control unit configured to expect that a control signal related to a search space having a same index is to be repeatedly received on different monitoring occasions.

(Second item)

The terminal as described in the first item, wherein
the control unit expects that the control signal is to be repeatedly received on different occasions in a case where the control signal is a type that is defined in advance.

(Third item)

The terminal as described in the first item or the second item, wherein
the control unit expects that a control resource set in which resources in a time direction are increased is to be separately configured for a reduced function terminal.

(Fourth item)

A base station comprising:

a transmission unit configured to transmit a control signal to a terminal; and
a control unit configured to expect that a control signal related to a search space having a same index is to be repeatedly received on different monitoring occasions.

(Fifth item)

A communication method performed by a terminal, the communication method including:

receiving a control signal in downlink; and
expecting that a control signal related to a search space having a same index is to be repeatedly received on different monitoring occasions.

According to any one of the above-described configurations, a technique that enables a terminal to appropriately receive a control signal in a wireless communication system is provided. According to the first item, a control signal related to a search space having a same index can be expected to be repeatedly received on different monitoring occasions. According to the second item, the control signal can be expected to be repeatedly received on different occasions in a case where the control signal is a type that is defined in advance. According to the third item, a control resource set in which resources in a time direction are increased can be expected to be separately configured for the reduced function terminal.

(Hardware structure)

In the above block diagrams used for describing an embodiment of the present invention (Fig. 28 and Fig. 29), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

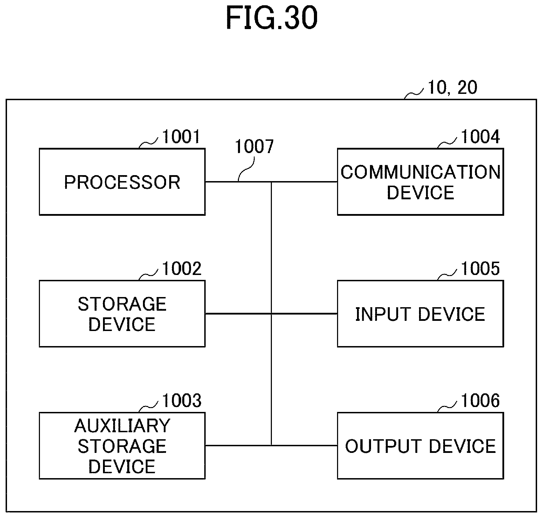

For example, the base station 10, the terminal 20, etc., according to an embodiment of the present disclosure may function as a computer for processing the radio communication method of the present disclosure. Fig. 30 is a drawing illustrating an example of hardware structures of the base station 10 and the terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and the terminal 20 may include one or more of each of the devices illustrated in the figure, or may not include some devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading or writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 28 may be realized by control programs that are stored in the storage device 1002 and are executed by the processor 1001. Further, for example, the control unit 240 of the terminal 20 illustrated in Fig. 29 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) or a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

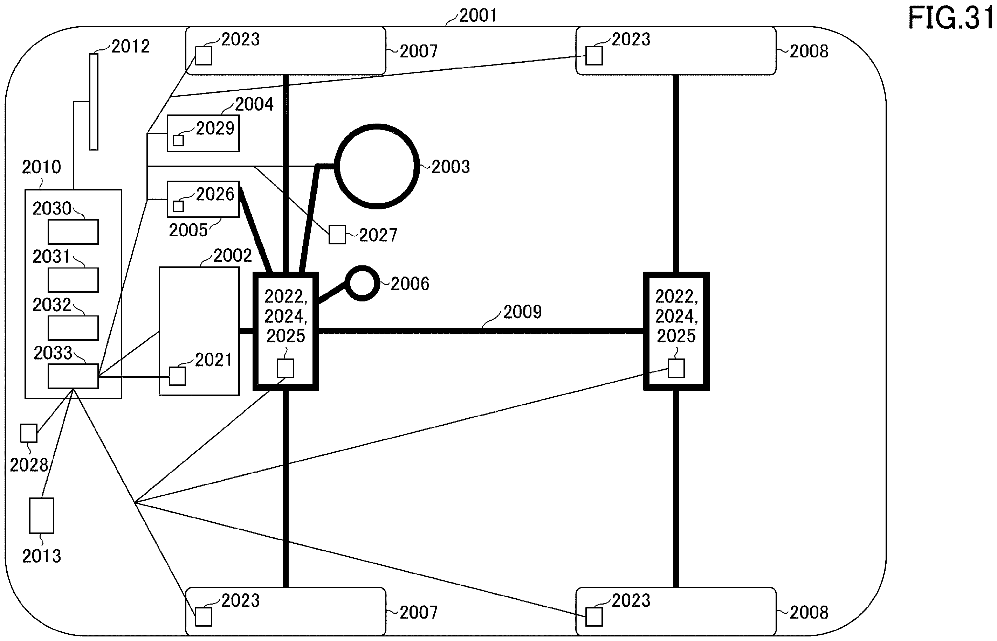

Fig. 31 shows an example of a configuration of a vehicle 2001. As shown in Fig. 31, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

The information service unit 2012 may include an input device (e.g., a keyboard, mouse, microphone, switch, button, sensor, touch panel, etc.) that accepts an external input, or may include an output device (e.g., a display, speaker, LED lamp, touch panel, etc.) that implements an external output.

A driving support system unit 2030 includes: various devices for providing functions of preventing accidents and reducing a driver's operating burden such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2029 that is input to the electronic control unit 2010; information that is obtained based on the signal; or information based on an input obtained from outside (user) via the information service unit 2012. The electronic control unit 2010, the various sensors 2021 to 2029, the information service unit 2012, or the like, may be referred to as an input unit for receiving an input. For example, PUSCH transmitted by the communication module 2013 may include information based on the above-described input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit for outputting information (for example, outputting information to devices such as a display or a speaker, based on PDSCH (or data/information decoded from the PDSCH) received by the communication module 2013).

In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

(Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, and each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, a transmission of information from the base station to the terminal may be replaced with an indication of control or operation from the base station to the terminal based on the information.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station is an object that can move, and the moving speed can be any speed. In addition, a mobile station that is not moving is also included. The mobile station includes, but is not limited to, a vehicle, a transport vehicle, an automobile, a motorcycle, a bicycle, a connected car, an excavator, a bulldozer, a wheel loader, a dump truck, a forklift, a train, a bus, a rear car, a rickshaw, a ship and other watercraft, an airplane, a rocket, an artificial satellite, a drone (registered trademark), a multicopter, a quadcopter, a balloon, and an object mounted thereon. In addition, the mobile station may be a mobile station that autonomously travels based on an operation command. The mobile station may be a vehicle (e.g., a car, an airplane, etc.), an unmanned mobile station (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, or specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

DESCRIPTION OF THE REFERENCE NUMERALS

10 Base station
110 Transmission unit
120 Reception unit
130 Configuration unit
140 Control unit
20 Terminal
210 Transmission unit

220 Reception unit
230 Configuration unit
240 Control unit
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

**Claims**

1. A terminal comprising:

   a reception unit configured to receive a control signal in downlink; and
   a control unit configured to expect that a control signal related to a search space having a same index is to be repeatedly received on different monitoring occasions.

2. The terminal as claimed in claim 1, wherein the control unit expects that the control signal is to be repeatedly received on different occasions in a case where the control signal is a type that is defined in advance.

3. The terminal as claimed in claim 1, wherein the control unit expects that a control resource set in which resources in a time direction are increased is to be separately configured for a reduced function terminal.

4. A base station comprising:

   a transmission unit configured to transmit a control signal to a terminal; and
   a control unit configured to expect that a control signal related to a search space having a same index is to be repeatedly received on different monitoring occasions.

5. A communication method performed by a terminal, the communication method comprising:

   receiving a control signal in downlink; and
   expecting that a control signal related to a search space having a same index is to be repeatedly received on different monitoring occasions.

# FIG.1

FIG.2

| Index | SS/ PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

EP 4 514 031 A1

FIG.3

| Index | SS/ PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 96 | 1 | 10 |
| 1 | 1 | 96 | 1 | 12 |
| 2 | 1 | 96 | 1 | 14 |
| 3 | 1 | 96 | 1 | 16 |
| 4 | 1 | 96 | 2 | 10 |
| 5 | 1 | 96 | 2 | 12 |
| 6 | 1 | 96 | 2 | 14 |
| 7 | 1 | 96 | 2 | 16 |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

EP 4 514 031 A1

FIG.4

| Index | SS/ PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 5 |
| 1 | 1 | 24 | 2 | 6 |
| 2 | 1 | 24 | 2 | 7 |
| 3 | 1 | 24 | 2 | 8 |
| 4 | 1 | 24 | 3 | 5 |
| 5 | 1 | 24 | 3 | 6 |
| 6 | 1 | 24 | 3 | 7 |
| 7 | 1 | 24 | 3 | 8 |
| 8 | 1 | 48 | 1 | 18 |
| 9 | 1 | 48 | 1 | 20 |
| 10 | 1 | 48 | 2 | 18 |
| 11 | 1 | 48 | 2 | 20 |
| 12 | 1 | 48 | 3 | 18 |
| 13 | 1 | 48 | 3 | 20 |
| 14 | Reserved | | | |
| 15 | Reserved | | | |

FIG.5

| Index | SS/ PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 2 |
| 1 | 1 | 48 | 1 | 6 |
| 2 | 1 | 48 | 2 | 2 |
| 3 | 1 | 48 | 2 | 6 |
| 4 | 1 | 48 | 3 | 2 |
| 5 | 1 | 48 | 3 | 6 |
| 6 | 1 | 96 | 1 | 28 |
| 7 | 1 | 96 | 2 | 28 |
| 8 | 1 | 96 | 3 | 28 |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

EP 4 514 031 A1

FIG.6

| Index | SS/ PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 1 |
| 2 | 1 | 24 | 2 | 2 |
| 3 | 1 | 24 | 2 | 3 |
| 4 | 1 | 24 | 2 | 4 |
| 5 | 1 | 24 | 3 | 0 |
| 6 | 1 | 24 | 3 | 1 |
| 7 | 1 | 24 | 3 | 2 |
| 8 | 1 | 24 | 3 | 3 |
| 9 | 1 | 24 | 3 | 4 |
| 10 | 1 | 48 | 1 | 12 |
| 11 | 1 | 48 | 1 | 14 |
| 12 | 1 | 48 | 1 | 16 |
| 13 | 1 | 48 | 2 | 12 |
| 14 | 1 | 48 | 2 | 14 |
| 15 | 1 | 48 | 2 | 16 |

EP 4 514 031 A1

FIG.7

| Index | SS/ PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 0 |
| 1 | 1 | 48 | 1 | 1 |
| 2 | 1 | 48 | 1 | 2 |
| 3 | 1 | 48 | 1 | 3 |
| 4 | 1 | 48 | 2 | 0 |
| 5 | 1 | 48 | 2 | 1 |
| 6 | 1 | 48 | 2 | 2 |
| 7 | 1 | 48 | 2 | 3 |
| 8 | Reserved | | | |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

EP 4 514 031 A1

FIG.8

| Index | SS/ PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 48 | 1 | 4 |
| 1 | 1 | 48 | 2 | 4 |
| 2 | 1 | 48 | 3 | 4 |
| 3 | 1 | 96 | 1 | 0 |
| 4 | 1 | 96 | 1 | 56 |
| 5 | 1 | 96 | 2 | 0 |
| 6 | 1 | 96 | 2 | 56 |
| 7 | 1 | 96 | 3 | 0 |
| 8 | 1 | 96 | 3 | 56 |
| 9 | Reserved | | | |
| 10 | Reserved | | | |
| 11 | Reserved | | | |
| 12 | Reserved | | | |
| 13 | Reserved | | | |
| 14 | Reserved | | | |
| 15 | Reserved | | | |

EP 4 514 031 A1

FIG.9

| Index | SS/ PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 4 |
| 2 | 1 | 24 | 3 | 0 |
| 3 | 1 | 24 | 3 | 4 |
| 4 | 1 | 48 | 1 | 0 |
| 5 | 1 | 48 | 1 | 28 |
| 6 | 1 | 48 | 2 | 0 |
| 7 | 1 | 48 | 2 | 28 |
| 8 | 1 | 48 | 3 | 0 |
| 9 | 1 | 48 | 3 | 28 |
| 10 | Reserved | | | |
| 11 | Reserved | | | |
| 12 | Reserved | | | |
| 13 | Reserved | | | |
| 14 | Reserved | | | |
| 15 | Reserved | | | |

EP 4 514 031 A1

# FIG.10

| CORESET#0 with 24RB |

15 kHz SCS

CORESET#0 with 48RB

CORESET#0 with 96RB

30 kHz SCS

CORESET#0 with 24RB

CORESET#0 with 48RB

5 MHz

Freq.

# FIG.11

| index | Multiplexing pattern | Number of RBs | Number of symbols | Offset |
|-------|---------------------|---------------|-------------------|--------|
| 0 | 1 | 48 | 1 | 2 |
| : | | | | |
| 9~15 | 1 | 24 | 2 | 0 |
| | 1 | 24 | 2 | 1 |
| | 1 | 24 | 2 | 2 |
| | 1 | 24 | 2 | 3 |
| | 1 | 24 | 2 | 4 |
| | 1 | 24 | 3 | 0 |
| | 1 | 24 | 3 | 1 |
| | 1 | 24 | 3 | 2 |
| | 1 | 24 | 3 | 3 |
| | 1 | 24 | 3 | 4 |

# FIG.12

| index | Multiplexing pattern | Number of RBs | Number of symbols | Offset |
|---|---|---|---|---|
| 0 | 1 | 48 | 1 | 2 |
| : | | | | |
| 9~15 | 1 | 24 | 2 | 0 |
| | 1 | 24 | 2 | 1 |
| | 1 | 24 | 2 | 2 |
| | 1 | 24 | 2 | 3 |
| | 1 | 24 | 2 | 4 |
| | 1 | 24 | 3 | 0 |
| | 1 | 24 | 3 | 1 |
| | 1 | 24 | 3 | 2 |
| | 1 | 24 | 3 | 3 |
| | 1 | 24 | 3 | 4 |

# FIG.13

| index | Multiplexing pattern | Number of RBs | Number of symbols | Offset |
|---|---|---|---|---|
| 0 | 1 | 24 | 2 | 0 |
| 1 | 1 | 24 | 2 | 1 |
| 2 | 1 | 24 | 2 | 2 |
| 3 | 1 | 24 | 2 | 3 |
| 4 | 1 | 24 | 2 | 4 |
| 5 | 1 | 24 | 3 | 0 |
| 6 | 1 | 24 | 3 | 1 |
| 7 | 1 | 24 | 3 | 2 |
| 8 | 1 | 24 | 3 | 3 |
| 9 | 1 | 24 | 3 | 4 |

FIG.14

| Index | $O$ | Number of search space sets per slot | $M$ | First symbol index |
|---|---|---|---|---|
| 0 | 0 | 1 | 1 | 0 |
| 1 | 0 | 2 | 1/2 | {0, if $i$ is even}, {$N_{symb}^{CORESET}$, if $i$ is odd} |
| 2 | 2 | 1 | 1 | 0 |
| 3 | 2 | 2 | 1/2 | {0, if $i$ is even}, {$N_{symb}^{CORESET}$, if $i$ is odd} |
| 4 | 5 | 1 | 1 | 0 |
| 5 | 5 | 2 | 1/2 | {0, if $i$ is even}, {$N_{symb}^{CORESET}$, if $i$ is odd} |
| 6 | 7 | 1 | 1 | 0 |
| 7 | 7 | 2 | 1/2 | {0, if $i$ is even}, {$N_{symb}^{CORESET}$, if $i$ is odd} |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |
| 15 | 5 | 1 | 1 | 2 |

EP 4 514 031 A1

# FIG.15

| CCE Aggregation Level | Number of Candidates |
|---|---|
| 1 | 8 |
| 2 | 4 |
| 4 | 2 |
| 8 | 1 |
| 16 | Not supported for eRedCap |

# FIG.16

TREATED AS A SINGLE
PDCCH RECEPTION

# FIG.17

TREATED AS A SINGLE PDCCH RECEPTION

# FIG.18

$N_{\text{symb}}^{\text{CORESET}}=3,\ L=6$

e. g., RB=48 with 15 kHz SCS

1RE

1REG

CRB

PRB ($L$=6, $R$=2)

interleaved

Received at 1st CORESET

Received at 2nd CORESET

# FIG.19

2nd CORESET

1st CORESET

5 MHz

CORESET#0

CORESET#0

CORESET#0

CORESET#0

$f$

$t$

TREATED AS A SINGLE
PDCCH RECEPTION

# FIG.20

5 MHz

CORESET#0

CORESET#0

CORESET#0

CORESET#0

$f$

$t$

TREATED AS A SINGLE PDCCH RECEPTION

# FIG.21

SCS 15 kHz, CORESET 24RB, 3Symbol

# FIG.22

| AL1 | AL2 | AL4 | AL8 |
|---|---|---|---|
| 18.11 | 8.88 | 3.27 | −0.44 |

# FIG.23

SCS 15 kHz, CORESET 24RB, 3Symbol, 2Rep.

# FIG.24

| AL1 | AL2 | AL4 | AL8 |
|-------|------|------|-------|
| 12.24 | 4.29 | 0.11 | −3.07 |

# FIG.25

SCS 15 kHz, CORESET 24RB, 3Symbol, 4Rep.

# FIG.26

| AL1 | AL2 | AL4 | AL8 |
|------|------|-------|-------|
| 7.64 | 1.17 | -2.28 | -5.13 |

FIG.27

$N_{\text{symb}}^{\text{CORESET}}=4$, $L=12$

CRB

PRB ($L=12$, $R=2$)

interleaved

# FIG.28

COMMUNICATION UNIT

TRANSMISSION UNIT 110

RECEPTION UNIT 120

CONFIGURATION UNIT 130

CONTROL UNIT 140

10

# FIG.29

COMMUNICATION UNIT

TRANSMISSION UNIT 210

RECEPTION UNIT 220

CONFIGURATION UNIT 230

CONTROL UNIT 240

20

# FIG.30

~10, 20

~1001
PROCESSOR

1007

~1004
COMMUNICATION DEVICE

~1002
STORAGE DEVICE

~1005
INPUT DEVICE

~1003
AUXILIARY STORAGE DEVICE

~1006
OUTPUT DEVICE

FIG.31

## INTERNATIONAL SEARCH REPORT

International application No.

**PCT/JP2022/018096**

**A. CLASSIFICATION OF SUBJECT MATTER**

*H04W 72/20*(2023.01)i; *H04W 4/70*(2018.01)i; *H04W 48/10*(2009.01)i
FI: H04W72/04 136; H04W4/70; H04W48/10

According to International Patent Classification (IPC) or to both national classification and IPC

**B. FIELDS SEARCHED**

Minimum documentation searched (classification system followed by classification symbols)

H04W4/00-99/00, H04B7/24-7/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-025801 A (SHARP KK) 10 February 2022 (2022-02-10)<br>paragraphs [0040]-[0058] | 1-5 |
| A | WO 2021/210264 A1 (PANASONIC INTELLECTUAL PROPERTY CORPORATION OF AMERICA) 21 October 2021 (2021-10-21)<br>paragraphs [0077]-[0082] | 1-5 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 November 2022** | **29 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/018096**

| Patent document cited in search report | | | Publication date (day/month/year) | Patent family member(s) | Publication date (day/month/year) |
|---|---|---|---|---|---|
| JP | 2022-025801 | A | 10 February 2022 | (Family: none) | |
| WO | 2021/210264 | A1 | 21 October 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.300 V16.8.0*, December 2021